(19) Europäisches Patentamt
European Patent Office
Office européen des brevets

(11) Publication number: **0 247 512 A2**

# (12) EUROPEAN PATENT APPLICATION

(21) Application number: **87107348.2**

(51) Int. Cl.4: **C08L 71/00**, C08L 31/06

(22) Date of filing: **20.05.87**

(30) Priority: **21.05.86 JP 117075/86**

(43) Date of publication of application:
**02.12.87 Bulletin 87/49**

(84) Designated Contracting States:
**BE DE FR GB IT NL**

(71) Applicant: **SUMITOMO CHEMICAL COMPANY, LIMITED**
**15 Kitahama 5-chome Higashi-ku**
**Osaka-shi Osaka 541(JP)**

(72) Inventor: **Asai, Kuniaki**
**8-8, Tanigawacho**
**Tondabayashi-shi(JP)**
Inventor: **Suzuki, Yasuro**
**9-1017, Yushudainishi-1-chome**
**Ichihara-shi(JP)**

(74) Representative: **Vossius & Partner**
**Siebertstrasse 4 P.O. Box 86 07 67**
**D-8000 München 86(DE)**

## (54) Thermoplastic resin composition improved in solvent resistance.

(57) A resin composition comprising 20 to 95% by weight of polyether ketone and 80 to 5% by weight of aromatic polysulfone, wherein a melt viscosity of said polyether ketone at 400°C represented by y (unit: poise) satisfies the following formula:

$$100 \leq y \leq 70x + 1,000$$

(x represents the percentage by weight of polyether ketone in the composition comprising polyether ketone and aromatic polysulfone) and the melt viscosity of said aromatic polysulfone represented by z (unit: poise) satisfies the following formula:

$$2,000 \leq z \leq 50,000.$$

EP 0 247 512 A2

# THERMOPLASTIC RESIN COMPOSITION IMPROVED IN SOLVENT RESISTANCE

## BACKGROUND OF THE INVENTION

### 1. FIELD OF THE INVENTION

The present invention relates to a resin composition improved in solvent resistance which comprises polyether ketone and aromatic polysulfone.

### 2. DESCRIPTION OF THE PRIOR ART

Compositions comprising polyether ketone and aromatic polysulfone are disclosed in Japanese Patent Application Kokai (Laid-Open) No. 34,512/83, Japanese Patent Application Kokai (Laid-Open) No. 202,256/84, etc. The characteristics feature of these inventions consists in that heat distortion temperature, high temperature stiffness and high temperature creep characteristics of polyether ketone are improved and the low stress cracking resistance, which is a fault of aromatic polysulfone, is overcome by compounding aromatic polysulfone, one of the resins having the highest glass transition temperature among thermoplastic resins, into polyether ketone having a relatively low glass transition temperature. Further, by changing the compounding ratio between polyether ketone and aromatic polysulfone, there can be obtained a resin composition of which the heat distortion temperature has an arbitrary value which lies between the heat distortion temperature of polyether ketone and that of aromatic polysulfone.

However, as the proportion of aromatic polysulfone in the composition increases, the characteristic properties of polyether ketone, i.e. solvent resistance, etc., deteriorate. On the other hand, performances required of resins are becoming higher and more diversified mainly in the fields of pioneer industries such as electric and electronic industries, automobile industry, OA instrument industry, and the like, so that it is desired to develop a resin composition comprising polyether ketone and aromatic polysulfone which can exhibit an improved solvent resistance while retaining the above-mentioned characteristic feature.

## SUMMARY OF THE INVENTION

The object of the present invention is to provide a resin composition comprising a polyether ketone and an aromatic polysulfone improved in solvent resistance and having a stable injection moldability.

The present inventors have consecutively studied the resin compositions comprising a polyether ketone and an aromatic polysulfone. As the result, it has been found that a resin composition excellent in high temperature stiffness, high temperature creep characteristics and stress cracking resistance and additionally in solvent resistance can be obtained by compounding a polyether ketone and an aromatic polysulfone of which melt viscosities fall in respective specified ranges. Based on this finding, the present invention has been accomplished.

Thus, the present invention provides a resin composition comprising 20 to 95% by weight of a polyether ketone and 80 to 5% by weight of an aromatic polysulfone, wherein a melt viscosity of said polyether ketone at 400°C represented by y (unit: poise) satisfies the following formula:

$$100 \leq y \leq 70x + 1,000$$

(x represents the percentage by weight of polyether ketone in the composition comprising a polyether ketone and an aromatic polysulfone) and a melt viscosity of said aromatic polysulfone at 400°C represented by z (unit: poise) satisfies the following formula:

$$2,000 \leq z \leq 50,000$$

DETAILED DESCRIPTION OF THE INVENTION

Next, details of the resin composition comprising 20 to 95% by weight of polyether ketone and 80 to 5% by weight of aromatic polysulfone will be mentioned below. In the present invention, "melt viscosity of resin" is defined as the apparent melt viscosity measured by filling a sample resin into a cylinder having a sectional area of 1 $cm^2$, allowing it to stand at 400°C for 5 minutes and then extruding the resin from a nozzle having a diameter of 1 mm and a length of 10 mm under an extruding pressure of 50 $kgf/cm^2$ i.e. by extruding it with a shearing stress of 1.25 $kgf/cm^2$).

The polyether ketone used in the present invention is a polymer having a recurring unit represented by the following formula:

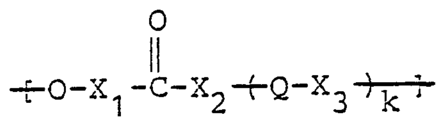

wherein $X_1$, $X_2$ and $X_3$ each represent a divalent aromatic residue having at least one 6-membered carbon ring such as:

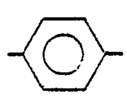 , 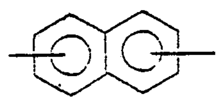 , 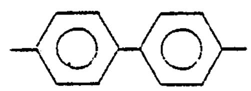 ,

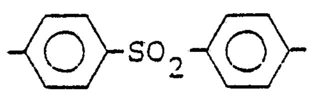 , 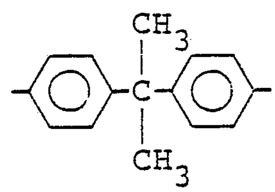

and the like; Q represents -O-, -CO-or a direct linkage; and k represents an integer of 0 to 3.

Among said polyether ketones, a polyether ketone having a recurring unit represented by the following formula:

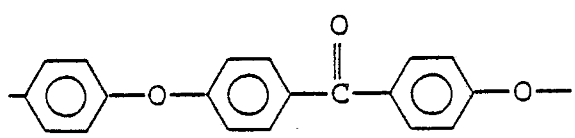

(VICTREX PEEK, manufactured by ICI Corp.) is particularly preferable.

Melt viscosity of the polyether ketone used in the present invention at 400°C represented by y (unit: poise) is in the range specified by the following formula (1):

$100 \leq y \leq 70x + 1{,}000$     (1)

(x represents the percentage by weight of polyether ketone in the composition comprising a polyether ketone and an aromatic polysulfone), and preferably in the range specified by the following formula (2):

$200 \leq y \leq 70x + 500$     (2)

and more preferably in the range specified by the following formula (3):

$500 \leq y \leq 70x$     (3)

If the melt viscosity of polyether ketone at 400°C is lower than 100 poises, the composition has too high a fluidity in the molten state due to the low molecular weight. As the result, at the time of injection molding, which is the most usual molding process, the molded form is instable and sufficient pressure is not retained, so that sink marks readily appear on the molded product and its dimensional accuracy is unsatisfactory. Further, when the melt viscosity of polyether ketone at 400°C represented by y (unit: poise) is in the range of the following formula (4):

$$y > 70x + 1{,}000 \qquad (4)$$

a solvent resistance of the composition cannot be improved sufficiently, even by compounding thereinto an aromatic polysulfone of which melt viscosity falls in the specified range.

The aromatic polysulfone used in the present invention is a polymer having a recurring unit of the following structure:

$-Ar-SO_2-$

wherein Ar represents a divalent aromatic residue. Its polymer chain is constituted of identical or different kind(s) of said residue, and usual aromatic polysulfones have the following structual unit:

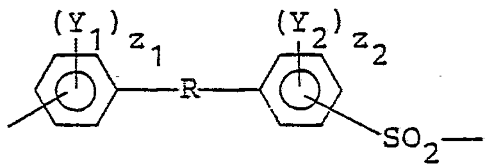

wherein $Y_1$ and $Y_2$ each represent an alkyl group having 1 to 4 carbon atoms or represents a halogen atom; $Z_1$ and $Z_2$ each represents an integer of 0 to 4; and R represents a direct linkage, -O-, -S-, $-\overset{O}{\overset{\|}{C}}-$ -or a residue of aromatic diol such as 4,4'-bisphenol and the like.

As the commercially available products belonging to the above-mentioned polymer, the following can be referred to:

polyether sulfone represented by the following recurring unit (VICTREX PES, manufactured by ICI Corp.):

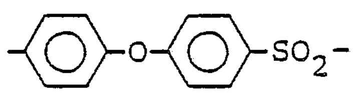

polysulfone represented by the following recurring unit (UDEL, manufactured by Union Carbide Co.):

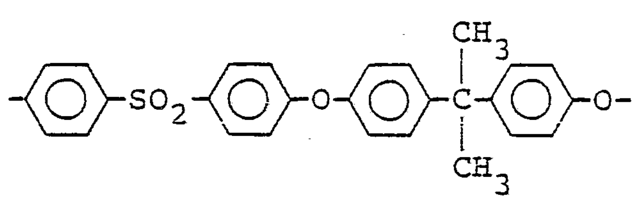

polyarylsulfone prepared by copolymerizing monomers having the following recurring units at various ratios:

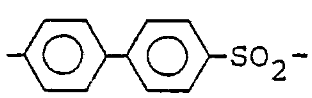

and

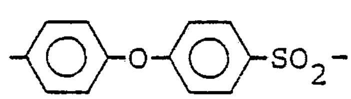

and the like.

Melt viscosity of the aromatic polysulfone used in the invention at 400°C represented by z (unit: poise) is in the range specified by the following formula (5):

$$2,000 \leq z \leq 50,000 \quad (5)$$

and preferably in the range specified by the following formula (6):

$$3,000 \leq z \leq 10,000 \quad (6)$$

If the melt viscosity of aromatic polysulfone at 400°C is lower than 2,000 poises, the composition cannot be sufficiently improved in solvent resistance even if the melt viscosity of polyether ketone is in the aforementioned range. On the other hand, when the melt viscosity of the aromatic polysulfone at 400°C is higher than 50,000 poises, fluidity of the molten composition is undesirably low.

The resin composition of the present invention comprises 20 to 95% by weight of polyether ketone and 80 to 5% by weight of aromatic polysulfone.

When the amount of the aromatic polysulfone is smaller than 5% by weight and the amount of the polyether ketone is larger than 95% by weight, a modulus of elasticity of the composition is undesirably low in the temperature range higher than the glass transition temperature of the polyether ketone. Further, under such a condition, creep resistance and the like of the composition in the temperature range higher than the glass transition temperature of the polyether ketone is as low as that of polyether ketone itself, so that the fault of polyether ketone cannot be overcome.

On the other hand, when the amount of polyether ketone is smaller than 20% by weight and the amount of the aromatic polysulfone is larger than 80% by weight, solvent resistance and the like of the composition markedly deteriorate, regardless of the melt viscosity of polyether ketone and aromatic polysulfone.

When 30 to 90% by weight of polyether ketone and 70 to 10% by weight of aromatic polysulfone are compounded, a better result is obtained in that the abovementioned properties are improved more markedly. A further better result is obtained when 40 to 90% by weight of polyether ketone and 60 to 10% by weight of aromatic polysulfone are compounded.

Into the composition of the present invention, at least one member selected from fibrous fillers such as glass fiber, carbon fiber, boron fiber, alumina fiber, aramide fiber and the like, inorganic needle-like fillers such as calcium silicate, potassium titanate whisker and the like, platy, lumpy or spherical fillers such as mica, glass flake, talc, natural silica, molten silica and the like, and organic or inorganic fillers such as titanium oxide, pigment and the like may be incorporated, unless the object of the invention is obstructed. Further, at least one member selected from conventional additives such as antioxidant, heat stabilizer, mold release agent, colorant, crystal nucleating agent and the like may also be incorporated thereinto.

In the composition of the present invention, the means for compounding the raw material is not critical. Thus, polyether ketone, aromatic polysulfone and fillers may be fed into a melting-and-mixing apparatus separately. Otherwise, it is also possible to premix these raw materials by means of mortar, Henschel mixer, ball mill, ribbon blender or the like and subsequently feed the resulting mixture into a melting-and-mixing apparatus.

Further, it is also possible to blend, in the dry state, powder or pellets of polyether ketone, powder or pellets of aromatic polysulfone, filler and additives and thereafter directly subject the blended mixture to injection molding.

The composition of the present invention has excellent high temperature stiffness, high temperature creep characteristics and stress cracking resistance which are the characteristic features of a composition comprising polyether ketone and aromatic polysulfone. In addition, owing to that a polyether ketone and an aromatic polysulfone, of which melt viscosities are in their respective specified ranges, are compounded, the composition of the present invention has an excellent solvent resistance.

Probably, this is attributable to the following function.

A composition comprising an aromatic polysulfone and a polyether ketone is a mutually insoluble system. Depending on the content and melt viscosity of polyether ketone, the composition takes various structures such as a "sea-island" structure in which polyether ketone forms a continuous phase and aromatic polysulfone forms a dispersed phase having a diameter ranging from several microns to 10 microns, or a structure in which polyether ketone forms a fibrous phase and aromatic polysulfone forms a continuous phase, or a structure in which aromatic polysulfone forms a continuous phase and polyether ketone forms an island phase, or intermediate structures of the above-mentioned structures.

Accordingly, when aromatic polysulfone much inferior to polyether ketone in solvent resistance forms the continuous phase, solvent resistance of the composition to polar solvents such as dimethylformamide, N-methyl-2-pyrrolidone, chloroform and the like, which are all good solvents for aromatic polysulfone, is quite low.

In a composition comprising a polyether ketone of which melt viscosity at 400°C is in the range specified by formula (1) and an aromatic polysulfone of which melt viscosity at 400°C is in the range specified by formula (5), the polyether ketone forms the continuous phase and the aromatic polysulfone forms the island phase. However, when a melt viscosity of polyether ketone at 400°C is out of the range specified by formula (1) or when a melt viscosity of aromatic polysulfone at 400°C is lower than 2,000 poises, the sea-island structure is not complete and the aromatic polysulfone partially forms a continuous phase, due to which the solvent resistance of the composition is relatively deteriorated.

Next, the present invention will be explained with reference to the following examples not in a limiting way but only in an illustrative way.

Examples 1 to 15 and Comparative Examples 1 to 11

As a polyether ketone component, there were used polyether ketones having the following recurring unit:

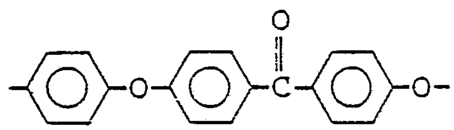

and having a melt viscosity of 1,000, 3,500 and 5,600 poises, respectively, as measured at 400°C (their inherent viscosities were 0.9, 1.10 and 1.31, respectively as measured in concentrated sulfuric acid at 25°C).

As an aromatic polysulfone, there were used Polymers A having the following recurring unit:

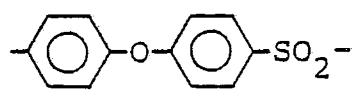

(their melt viscosities were 1,500, 3,500 and 4,500 poises, respectively, as measured at 400°C), Polymers B having the following recurring unit:

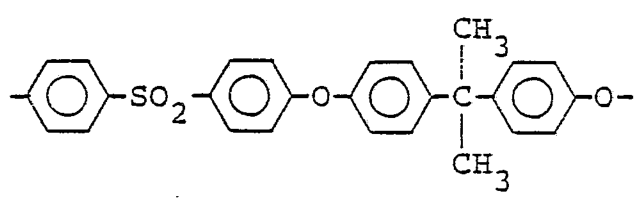

(their melt viscosities were 1,500 and 3,000 poises, respectively, as measured at 400°C), and Polymers C having the following recurring unit:

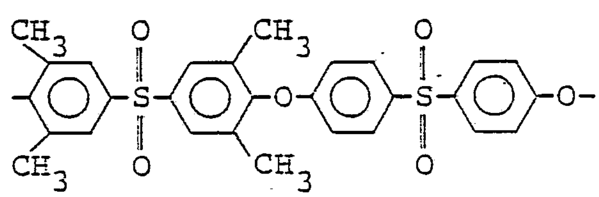

(their melt viscosities were 1,200, 4,000 and 8,500 poises, respectively, as measured at 400°C).

These ingredients were compounded at the compounding ratio shown in Tables 1, 2 and 3 and melted and kneaded at a temperature of 360°C by means of twin-screw extruder (PCM-30, manufactured by Ikegai Tekko), after which the strand was cooled with water and cut into pellets. The pellets thus obtained were formed into test pieces by means of an injection molding machine (Sumitomo Nestal 47/28 injection molding machine; cylinder temperature: 380°C; injection pressure: 1,500 kg/cm$^2$; injection speed: medium speed; injection time: 10 seconds; cooling time: 20 seconds; mold temperature: 150°C), with which heat distortion temperature was measured according to ASTM D-648 at a fiber stress of 18.6 kg/cm$^2$. Further, the test pieces for tensile test were heat-treated at 200°C for 60 minutes, with which tensile strength was measured according to ASTM-D-638.

Solvent resistance was tested by immersing the test pieces for tensile test in N-methyl-2-pyrrolidone (good solvent for aromatic polysulfone) for 24 hours and thereafter measuring the changes in weight and tensile strength.

In Table 1, the results given by various compositions comprising polyether ketone and Polymer A including examples of the present invention, comparative examples (compositions out of the scope of the present invention) and comparative examples (samples composed of polyether ketone or Polymer A only) are shown for three compounding ratios different from one another in the rank of heat resistance. As the proportion of Polymer A increases, solvent resistance of composition becomes lower although its heat distortion temperature becomes higher. Within the compositions belonging to the same heat resistance rank, an excellent solvent resistance is achievable when melt viscosities of polyether ketone and aromatic polysulfone satisfy the scope of claim of the present invention.

In Table 2, results given by various compositions comprising polyether ketone and Polymer B including examples of the present invention, comparative examples and samples composed of Polymer B only are shown. In Table 3, results given by various compositions comprising polyether ketone and Polymer C including examples of the present invention, comparative examples and samples composed of Polymer C only are shown. Both the tables demonstrate that an excellent solvent resistance is achievable when melt viscosities of polyether ketone and aromatic polysulfone satisfy the scope of claim of the present invention.

Table 1

| | Formulation | | | Heat distortion temperature | Initial tensile strength | After immersion in N-methyl-2-pyrrolidone for 24 hrs | | |
|---|---|---|---|---|---|---|---|---|
| | Melt viscosity of polyether ketone (poise) | Melt viscosity of polymer A (poise) | Compounding ratio: polyether ketone/polymer A (% by wt.) | (°C) | ($kg/cm^2$) | Increase in weight (%) | Tensile strength ($kg/cm^2$) | Retention of strength (%) |
| Example 1 | 1000 | 4500 | 30/70 | 201 | 830 | 10 | 720 | 87 |
| " 2 | " | 3500 | " | 201 | 830 | 15 | 510 | 61 |
| Comparative Example 1 | " | 1500 | " | 202 | 830 | 48 | 80 | 10 |
| " 2 | 3500 | 4500 | " | 201 | 820 | 40 | 270 | 33 |
| " 3 | 5600 | 4500 | " | 202 | 820 | 50 | 120 | 15 |
| Example 3 | 1000 | 4500 | 50/50 | 187 | 890 | 3 | 870 | 98 |
| " 4 | " | 3500 | " | 187 | 890 | 5 | 800 | 90 |
| Comparative Example 4 | " | 1500 | " | 188 | 890 | 17 | 530 | 59 |
| Example 5 | 3500 | 4500 | " | 185 | 860 | 9 | 770 | 90 |
| " 6 | " | 3500 | " | 185 | 860 | 15 | 640 | 74 |
| Comparative Example 5 | " | 1500 | " | 184 | 860 | 34 | 390 | 45 |
| " 6 | 5600 | 4500 | " | 184 | 860 | 21 | 520 | 60 |

- Cont'd -

Table 1 (Cont'd)

| | | | | | | | | |
|---|---|---|---|---|---|---|---|---|
| Example 7 | 1000 | 4500 | 80/20 | 171 | 890 | 1 | 870 | 98 |
| " 8 | " | 3500 | " | 172 | 890 | 2 | 850 | 96 |
| Comparative Example 7 | " | 1500 | " | 171 | 890 | 6 | 790 | 89 |
| Example 9 | 3500 | 4500 | " | 170 | 880 | 2 | 860 | 98 |
| " 10 | " | 3500 | " | 169 | 880 | 3 | 840 | 95 |
| Comparative Example 8 | " | 1500 | " | 170 | 880 | 8 | 760 | 86 |
| Example 11 | 5600 | 4500 | " | 167 | 880 | 3 | 860 | 98 |
| " 12 | " | 3500 | " | 168 | 880 | 5 | 840 | 95 |
| Comparative Example 9 | " | 1500 | " | 168 | 880 | 12 | 690 | 78 |
| Comparative Example 10 | 1000 | - | 100/0 | 156 | 970 | 0 | 970 | 100 |
| " 11 | 5600 | - | 100/0 | 152 | 960 | 0 | 960 | 100 |
| " 12 | - | 3500 | 0/100 | 205 | 860 | Dissolved | - | 0 |

Table 2

| | Formulation | | | Heat-distortion temperature | Initial tensile strength | After immersion in N-methyl-2-pyrrolidone for 24 hrs | | |
|---|---|---|---|---|---|---|---|---|
| | Melt viscosity of polyether ketone (poise) | Melt viscosity of polymer B (poise) | Compounding ratio: polyether ketone/polymer B (% by wt.) | (°C) | ($kg/cm^2$) | Increase in weight (%) | Tensile strength ($kg/cm^2$) | Retention of strength (%) |
| Example 13 | 1000 | 3000 | 50/50 | 167 | 870 | 7 | 760 | 87 |
| Comparative Example 13 | " | 1500 | " | 168 | 870 | 21 | 440 | 51 |
| " 14 | - | 3000 | 0/100 | 175 | 740 | Dissolved | - | 0 |

Table 3

| | Formulation | | | Heat-distortion temperature | Initial tensile strength | After immersion in N-methyl-2-pyrrolidone for 24 hrs | | |
|---|---|---|---|---|---|---|---|---|
| | Melt viscosity of polyether ketone (poise) | Melt viscosity of polymer C (poise) | Compounding ratio: polyether ketone/polymer C (% by wt.) | (°C) | ($kg/cm^2$) | Increase in weight (%) | Tensile strength ($kg/cm^2$) | Retention of strength (%) |
| Example 14 | 1000 | 8500 | 50/50 | 206 | 890 | 1 | 880 | 99 |
| " 15 | " | 4000 | " | 202 | 890 | 3 | 870 | 98 |
| Comparative Example 15 | " | 1200 | " | 205 | 890 | 19 | 520 | 58 |
| " 16 | - | 4000 | 0/100 | 245 | 830 | Dissolved | - | 0 |

## Claims

1. A resin composition comprising 20 to 95% by weight of a polyether ketone and 80 to 5% by weight of an aromatic polysulfone, wherein a melt viscosity of said polyether ketone at 400°C represented by y (unit: poise) satisfies the following formula:

$$100 \leq y \leq 70x + 1{,}000$$

(x represents percentage by weight of polyether ketone in a composition comprising a polyether ketone and an aromatic polysulfone) and a melt viscosity of an aromatic polysulfone represented by z (unit: poise) satisfies the following formula:

$$2{,}000 \leq z \leq 50{,}000.$$

2. A resin composition according to Claim 1, wherein the polyether ketone is a polymer having a recurring unit represented by the following formula:

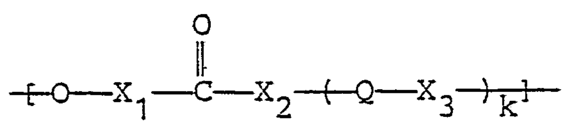

wherein $X_1$, $X_2$, and $X_3$ each represent a divalent aromatic residue having at least one 6-membered carbon ring selected from the group consisting of

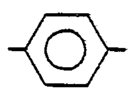 , 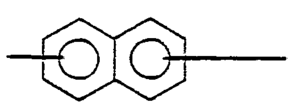 , 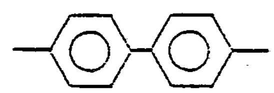 ,

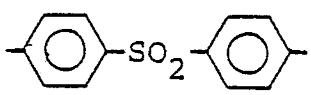 and 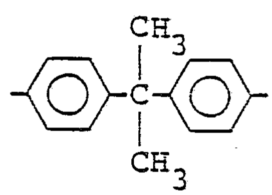 ,

Q represents -O-, -CO-, or a direct linkage; and k represents an integer of 0 to 3.

3. A resin composition according to Claim 2, wherein the polyether ketone is a polymer having a recurring unit represented by the following formula:

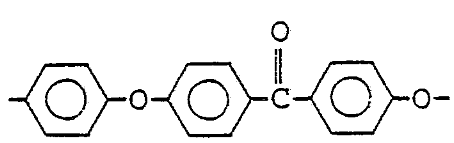

4. A resin composition according to Claim 1, wherein the melt viscosity of polyether ketone at 400°C represented by y (unit: poise) is in the range specified by the following formula:

$$200 \leq y \leq 70x + 500$$

wherein x is as defined above.

5. A resin composition according to Claim 1, wherein the aromatic polysulfone is a polymer having a recurring unit of the following formula:

$-Ar-SO_2-$

wherein Ar represents a divalent aromatic residue.

6. A resin composition according to Claim 5, wherein the aromatic polysulfone is a polymer having the following structural unit:

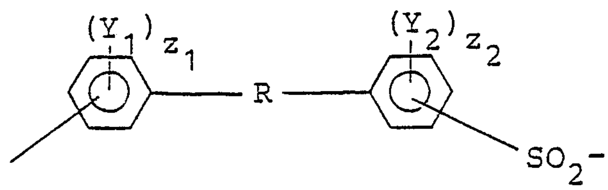

wherein $Y_1$ and $Y_2$ each represent an alkyl group having 1 to 4 carbon atoms or represents a halogen atom; $Z_1$ and $Z_2$ each represent an integer of 0 to 4; and R represents a direct linkage,

-O-, -S-, $-\overset{O}{\overset{\|}{C}}-$ -or a residue of aromatic diol.

7. A resin composition according to Claim 6, wherein the aromatic polysulfone is a polymer having the following recurring unit:

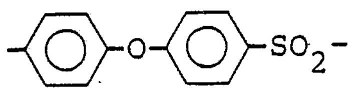

8. A resin composition according to Claim 6, wherein the aromatic polysulfone is a polyether sulfone having the following recurring unit:

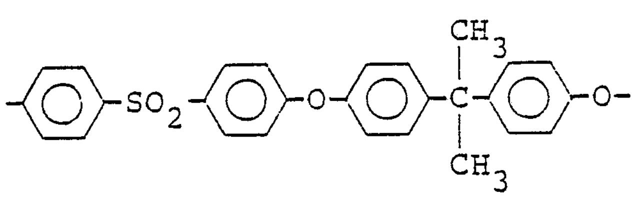

9. A resin composition according to Claim 6, wherein the aromatic polysulfone is a polyarylsulfone prepared by copolymerizing monomers having the following recurring units:

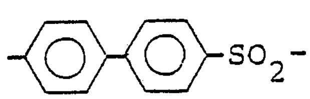

and

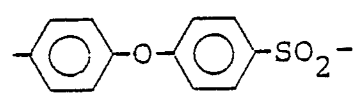

10. A resin composition according to Claim 6, wherein the melt viscosity of the aromatic polysulfone at 400°C represented by z (unit: poise) is in the range specified by the following formula:

$3,000 \leq z \leq 10,000$

11. A resin composition according to Claim 1, wherein the composition comprises 30 to 90% by weight of polyether ketone and 70 to 10% by weight of aromatic polysulfone.